# EUROPEAN PATENT APPLICATION

(11) **EP 1 638 305 A1**
(43) Date of publication of application: **22.03.2006**
(21) Application number: 04022242.4
(22) Date of filing: 17.09.2004
(51) Int. Cl.: H04M 3/54, H04M 3/20

(54) **Call transfer services**

(71) Applicant: SIEMENS AKTIENGESELLSCHAFT, 80333 München (DE)
(72) Inventor: Stylianopoulos, Georgios, 15234 Athen-Chalandri (GR)

(57) **Abstract**

A call transfer service that is controlled by a call transfer controller that instructs switching equipment of a telephone network to transfer an existing call initiated by a ringing user, subscriber (A), from a subscriber (B) to a remote user, subscriber (C). A first notification is sent to the remote user, subscriber (C), when the ringing user, subscriber (A), connects, the first notification including information that the call transfer service is active and a directory number of the ringing user, subscriber (A). A second notification is sent to the call transfer controller with information regarding the call transfer service initiated by the ringing user, subscriber (A). In one aspect, the information of the second notification indicating that the remote user, subscriber (c), has connected such that the call transfer controller is informed that the remote user, subscriber (C), has answered the existing call. In another aspect, the information of the second notification indicating that the call transfer service is released by the remote user, subscriber (C). A timer may be provided that times a duration of the existing call to the remote user, subscriber (C).

## Description

The present invention relates to a communications system consisting of switching centers and their interconnecting media. More particularly, the present invention relates to a call transfer (CT) service. A CT service is a switching system service feature that allows the calling or called user to instruct the local switching equipment or switch attendant to transfer an existing call to another terminal. Normally, call transfer is available on a call-by-call basis or on a semi-permanent basis.

A problem arises when a call transfer (CT) feature is performed in a ringing state. For example, when the CT controller is disconnected when the CT is invoked and all resources for this user are released. Problematically, the CT served user is not informed when the ringing user connects and hence does not know if the CT has been completed successfully.

Another problem arises when the call transfer (CT) feature is performed and the CT connection is released. In this case the CT controller is never informed about the release. So this user does not know how long the CT connection had lasted. Thus, no information about charging for this call is possible.

A solution to the first problem has already been proposed by an enhancement of the known Call Transfer (Explicit Call Transfer - ECT) service. With this enhancement, the CT controller can interrogate or release the CT transaction. The interrogation of the CT call gives the controller the opportunity to check whether the CT connection is still active.

The solution to the second problem has similarly been addressed. In the second case, it was further provided that the release function provides the CT controller with the possibility to release the CT connection if desired.

### OBJECTS AND SUMMARY OF THE INVENTION

An object of the invention is to provide a call service feature.

An object of the invention is to provide a call service feature informs a served user when the ringing user connects.

An object of the invention is to provide notification when the CT connection is released.

An object of the invention is to provide notification of the duration of the CT connection had lasted.

A call transfer service that is controlled by a call transfer controller that instructs switching equipment of a telephone network to transfer an existing call initiated by a ringing user, subscriber (A), from a subscriber (B) to a remote user, subscriber (C). A first notification is sent to the remote user, subscriber (C), when the ringing user, subscriber (A), connects, the first notification including information that the call transfer service is active and a directory number of the ringing user, subscriber (A). A second notification is sent to the call transfer controller with information regarding the call transfer service initiated by the ringing user, subscriber (A). In one aspect, the information of the second notification indicating that the remote user, subscriber (c), has connected such that the call transfer controller is informed that the remote user, subscriber (C), has answered the existing call. In another aspect, the information of the second notification indicating that the call transfer service is released by the remote user, subscriber (C). A timer may be provided that times a duration of the existing call to the remote user, subscriber (C) .

### BRIEF DESCRIPTION OF THE DRAWINGS

Figure 1 illustrates a signal flow diagram of the present invention; and
Figure 2 illustrates a signal flow diagram of a variation of the present invention.

### DETAILED DESCRIPTION OF THE PREFERRED EMBODIMENTS

The solution of the first technical problem provided by the present invention is an addition of one notification to the already existing notification procedure. Up to now, when the ringing user connects, a notification is sent to the remote user with the information that CT is now active and the directory number of the former ringing user. The inventive step is that, for first time, the CT controller is informed when, and if, the ringing CT remote partner has answered the CT call.

This invention proposes to add, on top of the standard notification which is sent to the Held-Idle remote partner, a new notification which targets the CT controller with the information that the former ringing remote partner has now connected and, therefore, CT connections have been completed successfully.

Optionally an extra notification may be provided at the disconnect phase of the CT connection in case that the ringing CT remote user has not answered the CT incoming call. With this notification , the served user is always informed whether a CT connection has been correctly through connected or not.

In one aspect, the notification, which is sent to the controller whenever a CT connection is successfully established, is the same as the one sent to the Held-Idle user in other words, the notification may contain information about the directory number of an Active-Idle user and that the CT is active. If this is not possible, then the notification is to contain both directory numbers of the connected users and the information that CT is active. This may occur when for example, when remote users are through connected and talking.

The notification, which is sent to the controller whenever a CT connection is not successfully established, should contain both connected users' directory numbers and the information that CT is not active in this case remote users were never through connected.

For practical reasons (i.e. if the user is not physically situated near the device when the remote users are connected), and if the operator requests it, the notification may remain at the served user's apparatus unchanged. If another display interrupts this one, the notification should be re-displayed.

This solution provides some important advantages for CT feature. First, the user of the feature can control more efficiently the CT feature in general. Further the served user is always informed whether the remote users have been actually through connected. In additional this procedure is automatic and hence the CT controller does not need to worry about the connection, meaning that the served user can invoke the CT call and then continue with something else (the checking of the connection status can be time-consuming and annoying). Also, the served user is informed only when the ringing user connects or the held-idle user disconnects, that is, without through connection with ringing remote user.

Therefore, the served user is informed in all cases about the successful completion of the CT transaction. Additionally, the served user knows exactly when the connection has been through connected or released.

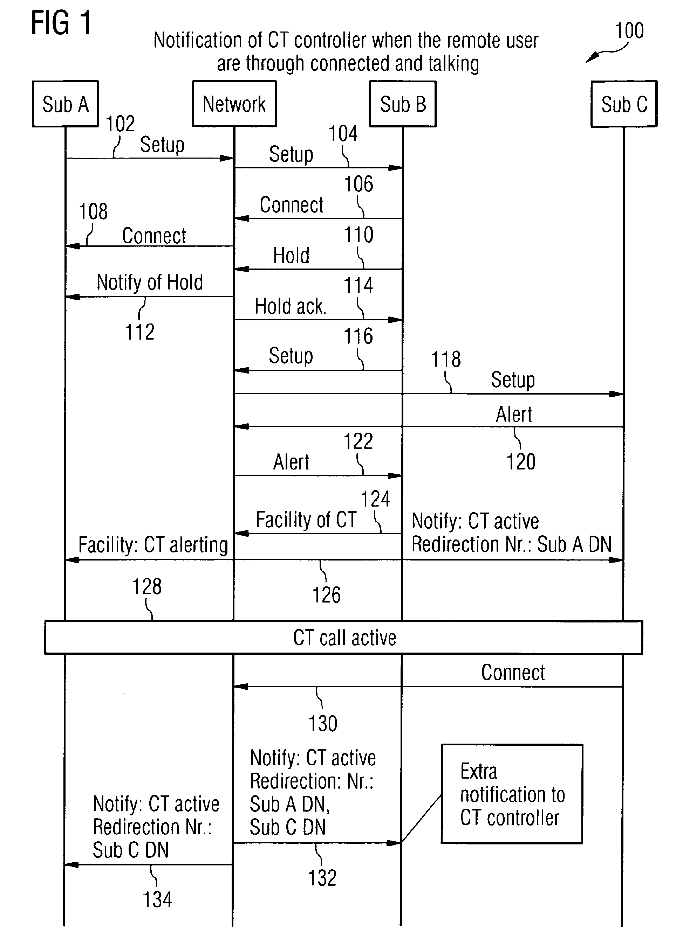

In a concrete example 100 shown in Figure 1, subscriber (A) wishes to connect two other users by using CT in a ringing state. This user (A) needs to know whether the call has been established successfully or not. By using this new enhancement of CT, when the remote users are through connected, the served user gets a notification that informs him that the remote users are connected.

In another example, a subscriber wishes to connect two other users by using CT in a ringing state. This user needs to know whether the call has been established successfully or not and this user can not use the interrogation operation because he will be out of the office for some time. By using this new enhancement of CT, when the remote users are through connected, the served user receives a notification, which informs him that the remote users are connected. Therefore, when the CT served user returns to the device, he can check whether the CT connection was established or not.

A subscriber(A) sets up a connection to a subscriber(B) by sending a set up signal 102 to the network and the network, in response sends a set up signal 104. In response, the subscriber(B) terminal issues a connect signal 106 to the network, and the network forwards the signal 108 to the subscriber (A) terminal, as indicated by 108.

In the case that the subscriber(B) enters a hold mode, a hold signal 110 is sent to the network and the network forwards the signal to the subscriber(A), as indicated by the reference 112. In response a hold acknowledge signal 114 is sent to the subscriber (B) terminal.

When it is to be desired to set up the connection to the subscriber (A), the subscriber (A) terminal sends a set up signal 116 to the network and, in response, the network issues a set up signal 118 to the subscriber (A).

In the event that a problem occurs in connecting to the subscriber (A), such as when the subscriber (A) is not reachable, a alert signal 120 is sent from the subscriber (C) to the network. The network acknowledges the alert signal by sending an alert signal to the subscriber (B) 122.

When a call transfer facility is initiated, the subscriber (B) terminal initiates the call transfer by sending a call transfer signal 124 to the network. The subscriber (A) is notified that the called transfer is active and the subscriber (A) DN is redirected as indicated by the reference number (126) to subscribe (C).

The invention of the CT call active feature 128 will now be discussed. In the call active state the subscriber (C) issues a connect signal 130 to the network. The present invention provides an extra notification to the CT-controller 132 sent from the network to the subscriber (B). With this notification signal the subscriber (B) is notified that the CT is active and the redirection number of subscriber (A) is sent along with the DN of subscriber (A) to subscriber (B). In addition, the network sends a notify signal 134 indicating that the CT is active and the redirection number of the subscriber (C) is sent to the subscriber (A) terminal reference number 134.

The solution to the second technical problem is based on the already existing CT notification mechanism. Until now, at the time of CT invocation, the CT controller informs both remote users that a CT is invoked including the directory number of the new partner.

This invention proposes to add, on top of the standard notification mechanism, another notification which is addressed to the CT controller at the time the CT connection is released. This mechanism informs the CT controller that the CT connection is released and, if demanded, the duration of the CT connection.

Until now, no specific timer to supervise the CT connection duration was provided. Therefore, the invention provides a new timer in order to supervise the duration of the CT connection. When the CT connection is released, the new mechanism is activated and the timer is released. The timing value is recorded and the duration information is inserted at a new field of the CT information message. The message is sent to the controller and the release of the CT connection continues as normal.

In addition, it should be noted that the directory numbers of the two remote users should also be included at the informative message in order to be able to discriminate one CT call termination from another. For example, when more than one CT connection exists for the same CT controller are active.

However, this is only half of the solution to the second problem, i.e., CT served user is not informed about the charging of the CT connection, is based on the already existing advice of charge (AOC) mechanism. When the CT controller is informed that the CT connection is being released, then a special trigger of the AOC mechanism is performed and then a CT specific AOC information is generated.

The implementation of the invention may be performed separately or combined. In other words, both corrections can be used by the served user by subscribing to a new property for CT, or can be used separately, i.e., the served user has to make a different subscription in order to have a duration notification and another one to have a charging notification (CT-A0C).

With the present invention, the controller is informed when the CT connection has been released (real-time response), how long the CT connection lasted and how much it costs. This solution provides advantages for the CT feature. For one, the user of the CT feature can control more efficiently the CT feature in general. Next, the served user is always informed when the remote users have disconnected the CT connection. This procedure is automatic and hence the CT controller does not have to worry about the connection, meaning that the served user can invoke the CT call, and then continue with something else. By comparison, checking of the connection status using the existing ECT enhancements can be time-consuming and annoying. With the invention, the served user is always informed (if subscribed) what the duration of the CT call was. The served user is always informed ( if subscribed) about the charging of a specific CT connection.

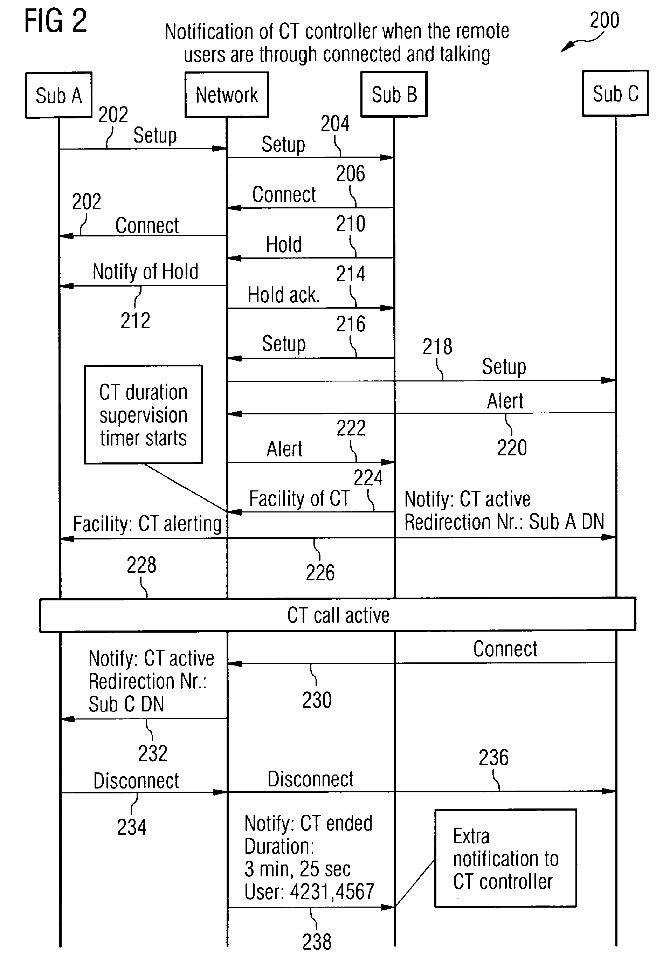

Now with reference to Figure 2, a concrete example 200 will be given, wherein the subscriber wishes to connect two other users by using CT. This user needs to know exactly when and how long their conversation lasted. By using this new enhancement of CT, when the remote users disconnect the CT connection, the served user is informed via a message about the duration and time of release of the CT connection.

In another example, a subscriber wishes to connect two other users by using CT. This user needs to know how much this connection costs. By using this new enhancement of CT, when the remote users disconnect the CT connection, the served user is informed via a message about the expenditure of the CT connection.

Initially, the remote users are connected through and in communication as shown Figure 2. Initially a set up signal 212 is sent from the subscriber (A) to the network and the set up signal is forwarded by the network to the subscriber (B) as indicated by reference number 204. A connect signal 206 is sent from the subscriber (B) to the network and this signal is forwarded from the network to the subscriber (A) as indicated by reference number 208.

In the case of the subscriber (B) entering a hold mode, a hold signal 210 is issued to the network and a notify of hold signal 212 is sent to the subscriber (A). In response, the network technologies notify of the hold by sending a hold acknowledge 214 to the subscriber (B).

When the subscriber (B) desires to set up a connection to the subscriber (C), a set up signal 216 is sent to the network and, in response, the network forwards the set up signal 218 to the subscriber (C).

When an error occurs, such as when the CT connection is released, an alert signal 220 is sent from the subscriber (C) to the network and in response, the alert signal is forwarded to the subscriber (B) as indicated by 222.

At this time, the present invention issues a CT timer, which is activated by sending a facility CT signal 224 from the subscriber (B) to the network. As indicated by the reference number 226, the subscriber (A) is notified that the CT is active. In response, the redirection number for subscriber (A) DN is sent to the subscriber (C).

Thus, the CT call active is activated as indicated by the reference number 228 at this time, the subscriber (C) sends a connect signal 230 to the network. In response the network notifies the subscriber (B) that the CT is active and sends the redirection number DN of the subscriber (C) to the subscriber (A) as indicated by the reference number 132. At this time, a disconnect signal 234 is sent from subscriber(A) to the network (234) and this disconnect signal is forwarded to the subscriber (C) (236). An extra notification 238 is sent to subscriber (B) from the network to notify when CT is ended, the duration and users. The duration of the CT call may be used, for example, to determine charging of the call.

It shall be appreciated that the present invention is not limited to the sole embodiments described herein but may be modified within the spirit and scope of the invention.

## Claims

1. A method implementing a call transfer service that is controlled by a call transfer controller that instructs switching equipment of a telephone network to transfer an existing call initiated by a ringing user, subscriber (A), from a subscriber (B) to a remote user, subscriber (C), the method comprising the steps of:
sending a first notification to the remote user, subscriber (C), when the ringing user, subscriber (A), connects, the first notification including information that the call transfer service is active and a directory number of the ringing user, subscriber (A); and
sending a second notification to the call transfer controller with information regarding the call transfer service initiated by the ringing user, subscriber (A).

2. The method of claim 1, wherein the information of the second notification indicating that the remote user, subscriber (c), has connected such that the call transfer controller is informed that the remote user, subscriber (C), has answered the existing call.

3. The method of claim 1, further comprising the step of sending a DN subscriber number of the ringing user, subscriber (A), from the telephone network to the subscriber (B)

4. The method of claim 1, further comprising the step of sending a DN subscriber number of the remote user, subscriber (C), from the telephone network to the subscriber (B).

5. The method of claim 1, further comprising the step of sending a DN subscriber number of the remote user, subscriber (C), from the telephone network to the ringing user, subscriber (A).

6. The method of claim 1, wherein the information of the second notification indicating that the call transfer service is released by the remote user, subscriber (C).

7. The method of claim 6, further comprising the step of providing a timer that times a duration of the existing call to the remote user, subscriber (C).

8. The method of claim 7, further comprising the step of calculating a charge based on the duration of the existing call to the remote user, subscriber (C).

9. A call transfer service apparatus that transfers an existing call initiated by a ringing user coupled to a telephone network, subscriber (A), from a subscriber (B) to a remote user, subscriber (C), the method comprising
a call transfer controller that instructs switching equipment of the telephone network to transfer the existing call initiated by the ringing user, subscriber (A), from the subscriber (B) to the remote user, subscriber (C);
a first notification sent to the remote user, subscriber (C), when the ringing user, subscriber (A), connects, the first notification including information that the call transfer service is active and a directory number of the ringing user, subscriber (A); and
a second notification sent to the call transfer controller with information regarding the call transfer service initiated by the ringing user, subscriber (A).

10. The apparatus of claim 9, wherein the information of the second notification indicating that the remote user, subscriber (c), has connected such that the call transfer controller is informed that the remote user, subscriber (C), has answered the existing call.

11. The apparatus of claim 9, wherein the second notification indicates a DN subscriber number of the ringing user, subscriber (A), from the telephone network to the subscriber (B)

12. The apparatus of claim 9, wherein the second notification indicates a DN subscriber number of the remote user, subscriber (C), from the telephone network to the subscriber (B) .

13. The apparatus of claim 9, wherein the second notification indicates a DN subscriber number of the remote user, subscriber (C), from the telephone network to the ringing user, subscriber (A).

14. The apparatus of claim 9, wherein the second notification indicates that the call transfer service is released by the remote user, subscriber (C).

15. The apparatus of claim 14, a timer that times a duration of the existing call to the remote user, subscriber (C).

16. The apparatus of claim 15, wherein the call transfer controller calculates a charge based on the duration of the existing call to the remote user, subscriber (C).
